# EUROPEAN PATENT SPECIFICATION

(11) **EP 3 044 457 B1**
(45) Date of publication and mention of the grant of the patent: **17.04.2019**
(21) Application number: 14755646.8
(22) Date of filing: 20.08.2014
(51) Int. Cl.: F03B 1/04

(54) **HYDRAULIC INJECTOR OF A PELTON TURBINE AND METHOD FOR THE PARTIAL DISASSEMBLY OF SUCH AN INJECTOR**
HYDRAULISCHER INJEKTOR EINER PELTONTURBINE UND VERFAHREN ZUR TEILDEMONTAGE EINES SOLCHEN INJEKTORS
INJECTEUR HYDRAULIQUE DE TURBINE PELTON ET METHODE DE DEMONTAGE PARTIEL D'UN TEL INJECTEUR

(30) Priority: 10.09.2013 FR 1358681
(43) Date of publication of application: 20.07.2016
(73) Proprietor: GE Renewable Technologies, 38100 Grenoble (FR)
(72) Inventor: BERTEA, Jean-Francois, F-07300 Saint Jean de Muzols (FR); TROILO, Serge, F-38360 Sassenage (FR)
(74) Representative: Brannen, Joseph Waclaw
(86) International application number: PCT/EP2014/067755
(87) International publication number: WO 2015/036212

(56) References cited:
- CH-A- 333 655
- CH-A5- 660 904
- CH-A5- 670 138
- SU-A1- 1 116 206
- US-A- 1 849 350

## Description

The present invention relates to a hydraulic injector of a Pelton turbine as well as a method for the partial disassembly of such an injector.

An injector of a Pelton turbine comprises in a manner known per se a nozzle which is centered on a central injection axis, a sleeve which is arranged coaxially in the interior of the nozzle, and a needle which is secured at one extremity of the sleeve along the central axis.

The water is injected between the needle and the nozzle and forms, as it exits from the injector, a jet which is directed along the central injection axis and which strikes the troughs of the turbine wheel. A plurality of injectors distributed around the wheel thus permit the wheel to be caused to rotate by transformation of the hydraulic energy into mechanical energy. If necessary, this mechanical energy is converted into electrical energy by means of an alternator.

Currently, the needle is secured to the sleeve of the injector by bolting. This permits the needle to be prevented from becoming disengaged from the sleeve under the hydraulic pressure. The needle of an injector wears rapidly in contact with water, however, since the flow passing through the turbine often carries with it sand or some other abrasive product with the potential to cause damage to the needle. It is accordingly necessary to clean, repair or replace the needle of an injector on a regular basis. In order to do this, the needle must be disassembled from the sleeve. Although the envisaged solution of the needle on the sleeve gives satisfaction in terms of mechanical strength, this solution is not practical for disassembling the needle, however. In fact, the bolts are not readily accessible to an operator, and the time required for disassembly of the needle is long. The turbine does not function and the generation of electricity ceases during disassembly of the needle.

US 1,849,350 relates to a hydraulic needle nozzle, the needle comprising a body member, a core detachably secured to said body, and a shell of wear resisting material surrounding and mounted upon said core, said shell being formed to provide a tapered end portion for the needle.

The aim of the invention is to remedy these disadvantages in particular by proposing an injector of a Pelton turbine, in which the disassembly of the needle in relation to the sleeve is facilitated and is more rapid.

The present invention is defined in the accompanying claims.

For this purpose, the invention relates to a hydraulic injector of a Pelton turbine comprising a nozzle centered on a central injection axis, a sleeve which is arranged coaxially in the interior of the nozzle, and a needle which is movably mounted in relation to the sleeve along the central injection axis. According to the invention, the needle is pivotable in relation to the sleeve about the central axis between a first position, in which it is axially secured to the sleeve, and a second position, in which it may be disengaged axially from the sleeve. The needle carries, on its internal surface, at least one rib which protrudes radially towards the central axis and which extends in a direction that is circumferential to the central axis, whereas a groove extends axially at the extremity of the sleeve and discharges onto a circumferential housing, the groove and the circumferential housing being adapted to guide the rib of the needle during a relative pivoting movement between the needle and the sleeve.

Thanks to the invention, the needle of the injector is disassembled simply by causing it to rotate about the central axis from its first position towards its second position. In this second position, it may be removed from the sleeve by an axial translation movement.

According to advantageous but non-compulsory aspects of the invention, an injector of a Pelton turbine may include one or a plurality of the following characteristics, in any technically acceptable combination:
- The needle covers the sleeve and its pivoting takes place around the sleeve.
- The rib extends on an angular sector, centered on the central axis, of which the vertex angle is substantially equal to or smaller than the angular aperture, taken according to a direction that is circumferential to the central axis of the groove. The rib has a thickness, measured parallel to the central axis, which is substantially equal to the width, measured parallel to the central axis of the circumferential housing.
- The injector comprises means for locking the needle in its first position, said means securing the needle and the sleeve in a rotationally fixed manner about the central axis.
- According to the invention, the locking means comprises a key, which is adapted to be inserted radially through the needle into a housing provided in the sleeve when the needle is in its first position.
- According to the invention, as an alternative to the key mentioned above, the locking means comprises at least one ball and a spring, which are installed axially between a rib of the needle and the sleeve, the spring exerting an axial elastic load force on the ball in order to maintain the ball in a housing of the rib.

The invention likewise relates to a Pelton turbine comprising a wheel provided with a plurality of troughs and hydraulic injectors, the troughs driving the wheel about an axis of rotation under the action of jets of water emitted by the injectors in the direction of the troughs, the injectors being as described above.

The invention relates, finally, to a method for the partial disassembly of an injector according to appended claim 7.

The invention and other advantages thereof will emerge more clearly in the light of the following description of two embodiments of an injector of a Pelton turbine in conformity with its principle, provided uniquely by way of example and made with reference to the accompanying drawings, in which:
- Figure 1 is a section depicting the principle of a Pelton turbine comprising injectors according to the invention,
- Figure 2 is a detailed view of the inset box II in Figure 1,
- Figure 3 is a view on a larger scale of the inset box III in Figure 2,
- Figure 4 is a perspective view in an exploded configuration of a sleeve and of a needle, both belonging to the injector in Figure 2,
- Figure 5 is a view in an assembled configuration and with a partial cut-away of the sleeve and of the needle in Figure 3,
- Figure 6 is a section along the line VI-VI in Figure 2, in which only the sleeve and the needle are depicted,
- Figure 7 is a section similar to that depicted in Figure 6, in which the needle has been tilted with a view to being disassembled from the sleeve,
- Figure 8 is a section similar to that depicted in Figure 2 for an injector in conformity with a second embodiment of the invention, and
- Figure 9 is a view on a larger scale of the inset box IX in Figure 7.

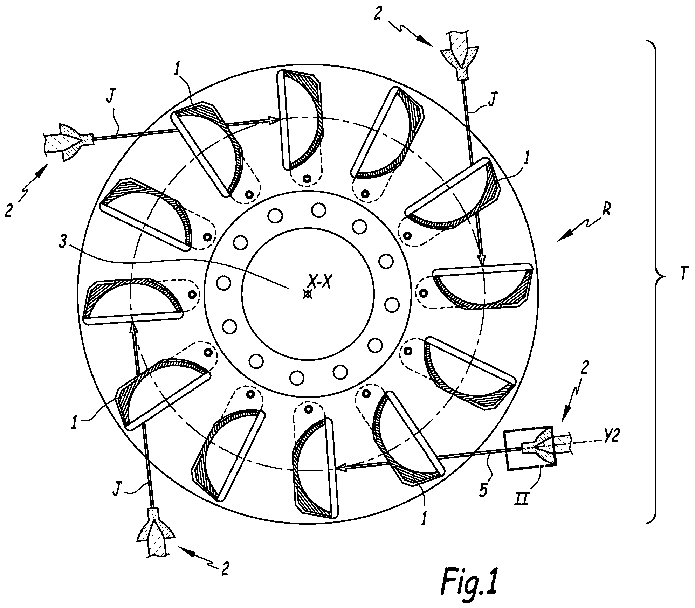

Depicted in Figure 1 is a Pelton turbine T. This Pelton turbine T comprises a wheel R provided with a plurality of troughs 1 regularly distributed over the entire periphery of the wheel R. The wheel R is secured in a rotationally fixed manner to a shaft 3, which is arranged at the center of the wheel R and which is centered on an axis of rotation X-X. Four injectors 2 are distributed around the wheel R and are designed to produce a jet of water J capable of striking the base of the troughs 1 of the wheel R. In this manner, the hydraulic energy provided by the impact of the jets J on the troughs 1 causes the wheel R to rotate about the axis X-X. The shaft 3 is connected, if necessary, to an alternator in such a way as to convert the hydraulic energy into electrical energy.

As a variant, the number of injectors 2 may be other than four. All the injectors are identical. Only one of these is described below. In this document, the front of an injector denotes the upstream direction and the rear denotes the downstream direction.

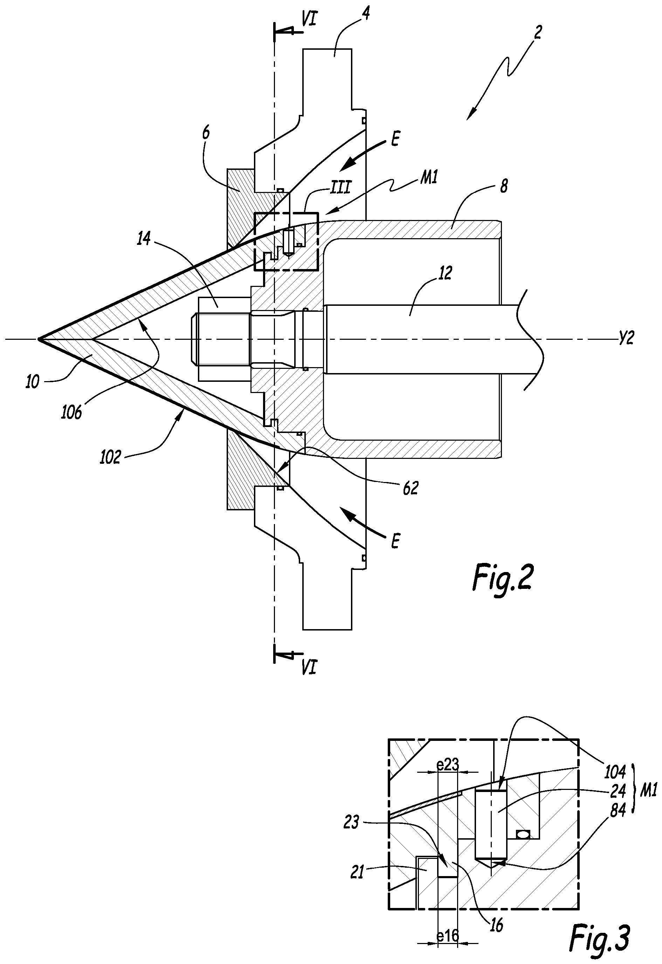

An injector 2 is depicted in detail in Figure 2. This injector 2 comprises a nozzle, 4 which is centered on a central injection axis Y2 which defines the direction of the jet J. A sleeve 8 is arranged coaxially in the interior of the nozzle 4, and a needle 10 is movably mounted at one extremity of the sleeve 8. The sleeve 8 generally has a cylindrical geometry of circular cross section, centered on the axis Y2, whereas the needle 10 has a conical and hollow geometry. Take note also of 102, the conical external surface of the needle 10 and 106, the conical internal surface of the needle 10. The sleeve 8 is likewise hollow and contains a spindle 12, which is secured to the sleeve 8 by means of a bolt 14. The displacement of the spindle 12 along the axis Y2 thus likewise causes the displacement of the sleeve 8. The fact of displacing the combination formed by the sleeve 8 and the needle 10 permits the modification of the flow of water as it exits from the injector 2. In practice, this flow of water is adjusted in order to maintain the wheel R in rotation at a constant speed.

A flow of water E passing through the turbine T originates, for example, from a reservoir of water upstream and is discharged into the injectors 2 between the sleeve 8 and the nozzle 4. The flow E is depicted in Figure 2 for illustrative purposes only since, in the configuration depicted in Figure 2, there is no flow of water because the injector 2 is not operating.

An end piece 6 is arranged between the nozzle 4 and the needle 10. Take note also of 62, the generally truncated internal surface of the end piece 6. In the configuration depicted in Figure 2, the injector 2 does not function because the external surface 102 of the needle 10 is in contact with the internal surface 62 of the end piece 6. The displacement of the needle 10 in relation to the end piece 6 towards the rear, that is to say upstream, allows the flow of water between the surfaces 62 and 102 and brings about the formation of the jet J.

As can be appreciated in Figure 3, a key 24 is inserted radially to the axis Y2 through the needle 10 and is recessed into a blind housing 84 in the sleeve 8 and into a through hole 104 in the needle 10, in such a way as to secure the sleeve 8 and the needle 10 in a rotationally fixed manner about the axis Y2.

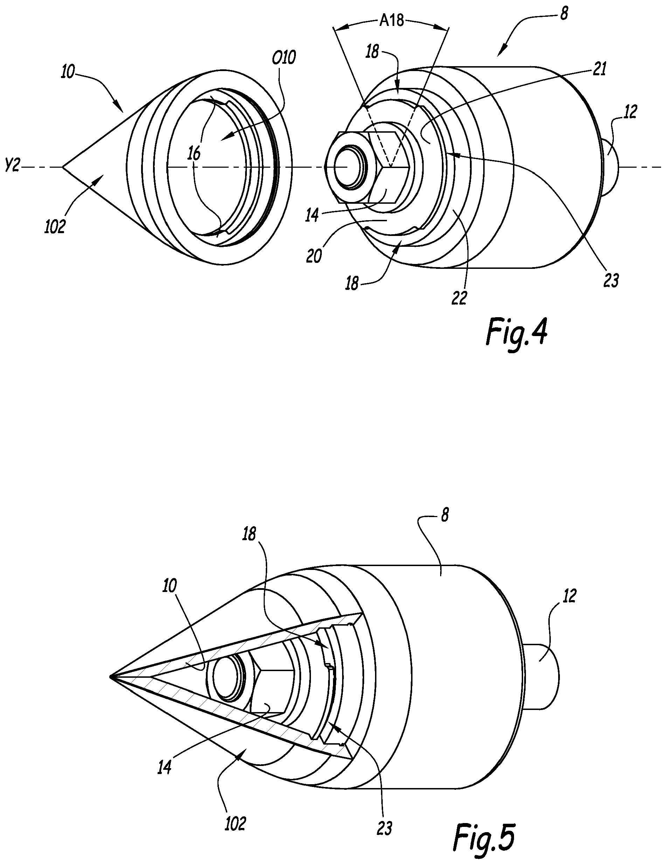

As can be appreciated in Figure 4, the needle 10 has an orifice O10 designed to receive the extremity of the sleeve 8. In the assembled configuration of the needle 10 on the sleeve 8, the needle 10 thus covers the front of the sleeve 8. In other words, the needle 10 surrounds the sleeve 8. Two interior ribs 16, which protrude radially towards the central axis Y2, are arranged in the interior of the needle 10, that is to say on the radial internal surface 106 of the needle 10. These ribs 16 are arranged in a diametrically opposed manner in relation to the axis Y2 and extend in a direction that is circumferential to the axis Y2. In practice, the ribs 16 extend on an angular sector, centered on the axis Y2, of which the vertex angle A16, measured in a plane perpendicular to the axis Y2, is in the range between 45° and 90°, and in particular in the order of 60°.

The sleeve 8 includes a plate 20, which is arranged on the front part of the sleeve 8 but to the rear of the bolt 14. The contour of the plate 20 is complementary to that of the orifice O10, when the needle 10 is sectioned in a plane which is perpendicular to the axis Y2 and which is taken axially to the level of the ribs 16. In fact, the plate 20 has two grooves 18, which extend in a manner circumferential to the axis Y2 on an angular sector centered on the axis Y2, of which the vertex angle A18 is substantially equal to or slightly greater than the angle A16 of the ribs 16 of the needle 10. In practice, the angle A18 lies between 47° and 92°, and is preferably in the order of 62°. The angle A18 represents the angular aperture of the groove 18, this aperture being measured in a direction that is circumferential to the central axis Y2. The needle 10 may thus be mounted on the sleeve 8 when the ribs 16 are aligned with the grooves 18. The grooves 18 define ears 21 between them.

As can be appreciated in Figure 4, the plate 20 protrudes with the rest of the sleeve 8 so that it delimits a circumferential housing 23. This circumferential housing 23 is arranged at the rear of the plate 20, more precisely between the plate 20 and a radial external shoulder 22 of the sleeve 8. This housing 23 has a width e23, measured parallel to the axis Y2, which corresponds to the distance between the plate 20 and the shoulder 22. This width e23 is slightly greater than or equal to the thickness e16, likewise measured parallel to the axis Y2, of the ribs 16 of the needle 10. This housing 23 is interrupted at the level of the grooves 18. It is formed in practice by two sections of a circumferential groove arranged respectively to the rear of the ears 21.

Thus, in order to mount the needle 10 on the sleeve 8, the needle should first be positioned axially 10 on the sleeve 8, taking care to align the ribs 16 with the grooves 18 and to apply a thrust force in the direction of the sleeve 8 in such a way that the ribs 16 slide axially in the grooves 18 and arrive at the circumferential housing 23. A torque C1 is then applied to the needle 10 in order to cause it to rotate R1, that is to say in order to cause it to pivot, about the central axis Y2 so that the ribs 16 slide around the sleeve 8 in the housing 23. The grooves 18 are thus axial guide grooves, whereas the housing 23 corresponds to a circumferential groove for guiding the ribs in rotation 16 around the sleeve 8.

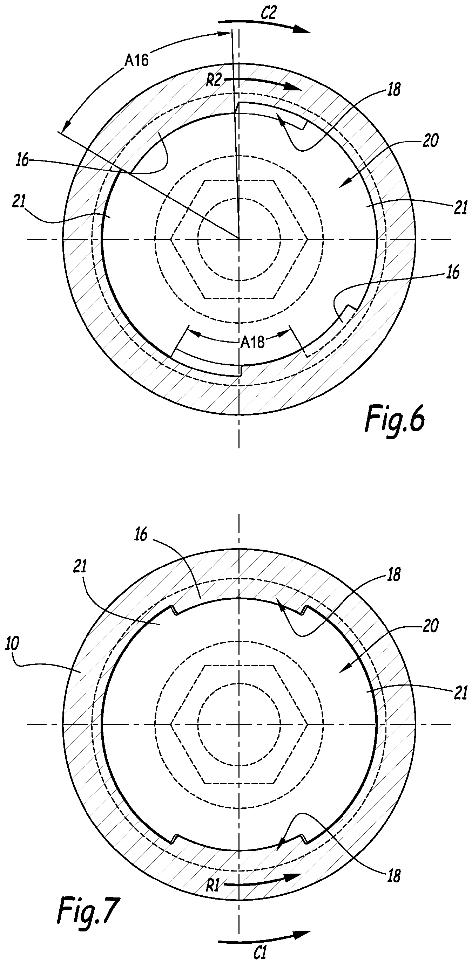

As can be appreciated in Figure 6, when the ribs 16 of the needle 10 are engaged in the circumferential housing 23, the ears 21 of the plate 20 oppose any axial retraction movement of the needle 10 towards the front. This is referred to as a bayonet-type fixing. In other words, the engagement of the ribs 16 in the circumferential housing 23 results in the needle 10 being secured axially to the sleeve 8. The needle 10 is pivoted in addition about the axis Y2 until the drilling 104 in the needle 10 comes into radial alignment with the blind housing 84 of the sleeve 8. The key 24 is then inserted into the drilling 104 and is engaged in the housing 84 in order to prevent the needle 10 from tilting around the sleeve 8. The disengagement of the needle 10 under the pressure of the flow E is prevented in this way. The key 24 thus forms, together with the drilling 104 and the housing 84, means M1 for locking the needle 10 when the latter is mounted on the sleeve 8. This key 24 secures the needle 10 and the sleeve 8 in a rotational manner about the axis Y2.

In order to disassemble the needle 10 from the sleeve 8, the locking means M1 must be deactivated in the first instance. In order to do this, the key 24 is removed by the operator in such a way as to make the needle 10 free to rotate around the sleeve 8. A torque C2 is then applied to the needle 10 about the axis Y2 in order to pivot the needle 10 angularly in a rotational movement R2. The needle 10 thus pivots from a first position, which is depicted in Figure 6 and in which the needle 10 is axially secured to the sleeve 8, to a second position depicted in Figure 7.

In Figures 6 and 7, the torque C2 is in the opposite direction to the torque C1 utilized for assembly. As a variant, and taking into account the fact that the housing 23 discharges into the grooves 18, it may be in the same direction. The rotations R1 and R2 are thus either in opposite directions or in the same direction.

This pivoting of the needle 10 permits the ribs 16 of the needle 10 to be brought into alignment with the grooves 18 of the sleeve 8, as depicted in Figure 7. In practice, the needle 10 is pivoted by an angular amplitude in the order of the angle A16. In the configuration in Figure 7, it is possible to disengage the needle 10 from the sleeve 8 simply by the application of an axial force towards the front, since the ribs 16 are able to slide axially in the grooves 18.

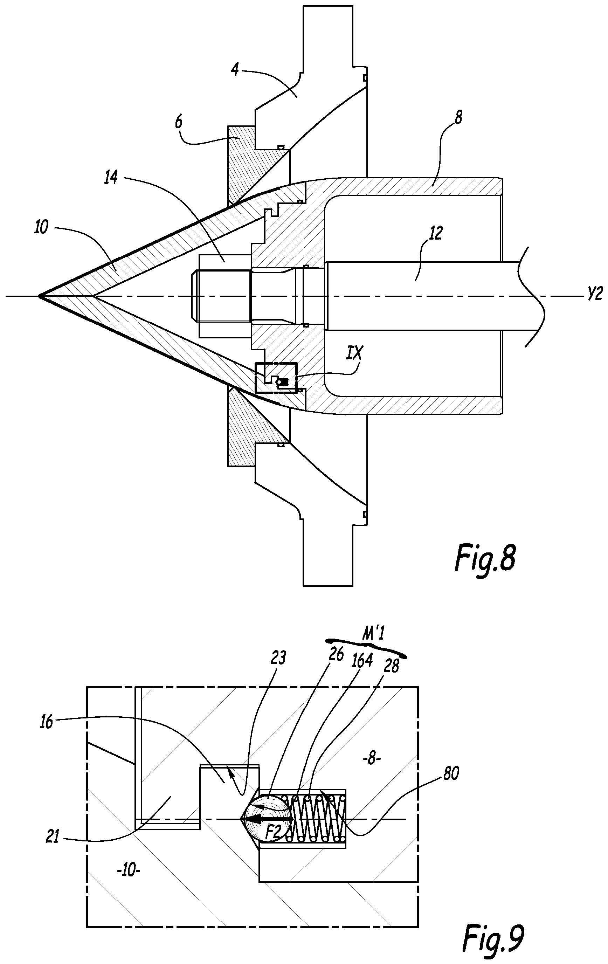

A second embodiment of an injector 2 is depicted in Figures 8 and 9. In this second embodiment, those elements that are identical with the premier mode retain their reference, and any elements that are added bear other references. The difference with the premier embodiment is that the injector 2 in conformity with this second embodiment is equipped with means M'1 for locking the needle 10 on the sleeve 8, which means comprise a ball 26 and a spring 28. The ball 26 and the spring 28 are installed between a rib 16 of the needle 10 and the shoulder 22 of the sleeve 8. More precisely, the ball 26 and the spring 28 are housed in a blind hole 84 in the sleeve 8. In the locked configuration, that is to say in the configuration depicted in Figures 8 and 9, the ball 26 is engaged partially in a blind housing 164 of the rib 16, which likewise belongs to the means M'1. The ball 16 is subjected to an axial elastic load force F2 towards the front, which is exerted by the spring 28. In this way, the ball 26 is maintained in a position in which it is engaged in its housing 164. The ball 26 therefore prevents, by default, the pivoting of the needle 10 about the central axis Y2. During disassembly of the needle 10, a high torque is necessary in order to disengage the ball 26 from the housing provided in the rib 16. This constitutes a form of security because the needle 10 is not able to turn in relation to the sleeve 8 solely under the effect of the hydraulic pressure. After the ball 28 is disengaged from the housing, it no longer opposes the pivoting of the needle 10.

During assembly of the needle 10 on the sleeve 8 of an injector conforming to the second embodiment, the ball 28 is inserted into the housing 162 of the rib 16 by the action of the spring 28 when the housing 164 arrives, at the end of its travel, axially in relation to the ball 26. This then marks the end of the assembly of the needle 10 on the sleeve 8.

In a variant that is not depicted here, other means for locking the needle 10 in rotation on the sleeve 8 may be utilized.

In a variant that is not depicted here, the sleeve 8 is hollow and has an orifice, into which the needle 10 penetrates so that the sleeve 8 surrounds the needle 10. In this case, the sleeve 8 has one or a plurality of circumferential radial ribs defining between them a passageway for a protruding part of the needle 10.

In a variant that is not depicted here, the needle 10 carries a single rib 16, and a single groove 18 is arranged in the sleeve 8. Likewise, the needle 10 may carry a number of ribs 16 being strictly greater than two in number, each rib 16 corresponding to a groove 18 in the sleeve 8.

In a variant that is not depicted here, the locking means M'1 include a plurality of balls 28, each adapted to be engaged in a blind housing 164 in the ribs 16.

The technical characteristics of the embodiments and variants considered above may be combined with each other in order to produce new embodiments of the invention.

## Claims

1. Hydraulic injector (2) for a Pelton turbine (T), comprising:
- a nozzle (4), centered on a central injection axis (Y2),
- a sleeve (8), which is arranged coaxially in the interior of the nozzle (4), and
- a needle (10), which is movably mounted at one extremity of the sleeve (8) along the central injection axis (Y2),
wherein the needle (10) is pivotable in relation to the sleeve (8) about the central axis (Y2) between a first position, in which it is axially secured to the sleeve (8), and a second position, in which it may be disengaged axially from the sleeve (8),
**characterized in that** the injector (2) comprises means (M1; M'1) for locking the needle (10) in its first position, said means securing the needle and the sleeve (8) in a rotationally fixed manner about the central axis (Y2), and that the locking means (M'1) comprises at least one ball (26) and a spring (28), which are installed axially between a rib (16) of the needle (10) and the sleeve (8), the spring exerting an axial elastic load force (F2) on the ball in order to maintain the ball in a housing of the rib.

2. Injector according to Claim 1, **characterized in that** the needle (10) carries, on its internal surface (106), at least one rib (16) which protrudes radially towards the central axis (Y2) and which extends in a direction that is circumferential to the central axis, and **in that** a groove (18) extends axially at the extremity of the sleeve (8) and discharges onto a circumferential housing (23), the groove and the circumferential housing being adapted to guide the rib of the needle during a relative pivoting movement between the needle (10) and the sleeve (8).

3. Injector according to Claim 2, **characterized in that** the rib (16) extends on an angular sector, centered on the central axis (Y2), of which the vertex angle (A16) is substantially equal to or smaller than the angular aperture (A18), taken according to a direction that is circumferential to the central axis of the groove (18).

4. Injector according to Claim 3, **characterized in that** the rib (16) has a thickness (e16), measured parallel to the central axis, which is substantially equal to the width (e23), measured parallel to the central axis of the circumferential housing (23).

5. Hydraulic injector (2) for a Pelton turbine (T), comprising:
- a nozzle (4), centered on a central injection axis (Y2),
- a sleeve (8), which is arranged coaxially in the interior of the nozzle (4), and
- a needle (10), which is movably mounted at one extremity of the sleeve (8) along the central injection axis (Y2),
wherein the needle (10) is pivotable in relation to the sleeve (8) about the central axis (Y2) between a first position, in which it is axially secured to the sleeve (8), and a second position, in which it may be disengaged axially from the sleeve (8),
**characterized in that** the injector (2) comprises means (M1; M'1) for locking the needle (10) in its first position, said means securing the needle and the sleeve (8) in a rotationally fixed manner about the central axis (Y2), and that the locking means (M1) comprises a key (24), which is adapted to be inserted radially through the needle (10) into a housing (84) provided in the sleeve (8) when the needle is in its first position.

6. Pelton turbine (T), comprising a wheel (R) provided with a plurality of troughs (1) and hydraulic injectors (2), the troughs driving the wheel about an axis of rotation (X-X) under the action of jets of water (J) emitted by the injectors in the direction of the troughs, **characterized in that** the injectors are in conformity with one of Claims 1 to 5.

7. Method for the partial disassembly of an injector according to one of Claims 1 to 5, **characterized in that** it comprises steps involving:
a) causing the needle (10) to pivot about the central injection axis (Y2) from its first position to its second position, and
b) disengaging the needle axially from the sleeve (8) of the injector.
**characterized in that** the injector (2) is in conformity with one of Claims 1 to 5 and **in that** it comprises a previous stage to the stage a) involving the deactivation of the locking means (M1; M'1) in order to allow the needle (10) to pivot between its first position and its second position.

## Patentansprüche

1. Hydraulischer Injektor (2) für eine Pelton-Turbine (T), umfassend:
- eine Düse (4), die auf einer zentralen Injektionsachse (Y2) zentriert ist,
- eine Hülse (8), die koaxial im Inneren der Düse (4) angeordnet ist, und
- eine Nadel (10), die beweglich an einem Ende der Hülse (8) entlang der zentralen Injektionsachse (Y2) montiert ist,
wobei die Nadel (10) schwenkbar in Bezug auf die Hülse (8) um die zentrale Achse (Y2) zwischen einer ersten Position, in der sie axial an der Hülse (8) befestigt ist, und einer zweiten Position, in der sie sich axial von der Hülse (8) lösen kann, ist,
**dadurch gekennzeichnet, dass** der Injektor (2) Mittel (M1; M'1) zum Sperren der Nadel (10) in ihrer ersten Position umfasst, wobei die Mittel die Nadel und die Hülse (8) auf eine drehfeste Weise um die zentrale Achse (Y2) befestigen, und dass das Sperrmittel (M'1) mindestens eine Kugel (26) und eine Feder (28) umfasst, die axial zwischen einer Rippe (16) der Nadel (10) und der Hülse (8) installiert sind, wobei die Feder eine axiale elastische Lastkraft (F2) auf die Kugel ausübt, um die Kugel in einem Gehäuse der Rippe zu halten.

2. Injektor nach Anspruch 1, **dadurch gekennzeichnet, dass** die Nadel (10) auf ihrer inneren Oberfläche (106) mindestens eine Rippe (16) trägt, die radial zur zentralen Achse (Y2) hin vorsteht und die sich in einer Richtung erstreckt, die zur zentralen Achse umlaufend ist, und dadurch, dass sich eine Nut (18) axial am Ende der Hülse (8) erstreckt und auf einem umlaufenden Gehäuse (23) mündet, wobei die Nut und das umlaufende Gehäuse angepasst sind, um die Rippe der Nadel während einer relativen Schwenkbewegung zwischen der Nadel (10) und der Hülse (8) zu führen.

3. Injektor nach Anspruch 2, **dadurch gekennzeichnet, dass** sich die Rippe (16) auf einem winkelförmigen Bereich erstreckt, der auf der zentralen Achse (Y2) zentriert ist, von dem der Brechungswinkel (A16) im Wesentlichen gleich der oder kleiner als die winkelförmige Öffnung (A18) ist, gemäß einer Richtung, die zur zentralen Achse der Nut (18) umlaufend ist, gesehen.

4. Injektor nach Anspruch 3, **dadurch gekennzeichnet, dass** die Rippe (16) eine Dicke (e16) aufweist, die parallel zur zentralen Achse gemessen wird, die im Wesentlichen gleich der Breite (e23) ist, die parallel zur zentralen Achse des umlaufenden Gehäuses (23) gemessen wird.

5. Hydraulischer Injektor (2) für eine Pelton-Turbine (T), umfassend:
- eine Düse (4), die auf einer zentralen Injektionsachse (Y2) zentriert ist,
- eine Hülse (8), die koaxial im Inneren der Düse (4) angeordnet ist, und
- eine Nadel (10), die beweglich an einem Ende der Hülse (8) entlang der zentralen Injektionsachse (Y2) montiert ist,
wobei die Nadel (10) schwenkbar in Bezug auf die Hülse (8) um die zentrale Achse (Y2) zwischen einer ersten Position, in der sie axial an der Hülse (8) befestigt ist, und einer zweiten Position, in der sie sich axial von der Hülse (8) lösen kann, ist,
**dadurch gekennzeichnet, dass** der Injektor (2) Mittel (M1; M'1) zum Sperren der Nadel (10) in ihrer ersten Position umfasst, wobei die Mittel die Nadel und die Hülse (8) auf eine drehfeste Weise um die zentrale Achse (Y2) befestigen, und dass das Sperrmittel (M1) einen Schlüssel (24) umfasst, der angepasst ist, um radial durch die Nadel (10) in ein Gehäuse (84) gesteckt zu werden, das in der Hülse (8) bereitgestellt ist, wenn die Nadel in ihrer ersten Position ist.

6. Pelton-Turbine (T), umfassend ein Rad (R), das mit einer Vielzahl von Durchgängen (1) und hydraulischen Injektoren (2) bereitgestellt ist, wobei die Durchgänge das Rad um eine Drehachse (X-X) unter der Einwirkung von Wasserstrahlen (J), die durch die Injektoren in der Richtung der Durchgänge ausgesendet werden, antreiben, **dadurch gekennzeichnet, dass** die Injektoren mit einem der Ansprüche 1 bis 5 in Übereinstimmung sind.

7. Verfahren zur Teildemontage eines Injektors nach einem der Ansprüche 1 bis 5, **dadurch gekennzeichnet, dass** es Schritte umfasst, die beinhalten:
a) Bewirken, dass die Nadel (10) um die zentrale Injektionsachse (Y2) von ihrer ersten Position in ihre zweite Position schwenkt, und
b) axiales Lösen der Nadel von der Hülse (8) des Injektors,
**dadurch gekennzeichnet, dass** der Injektor (2) in Übereinstimmung mit einem der Ansprüche 1 bis 5 ist und dadurch, dass es einen vorhergehenden Schritt zu Schritt a) umfasst, der die Deaktivierung der Sperrmittel (M1; M'1) beinhaltet, um es der Nadel (10) zu ermöglichen, zwischen ihrer ersten Position und ihrer zweiten Position zu schwenken.

## Revendications

1. Injecteur hydraulique (2) pour une turbine Pelton (T), comprenant :
- une tuyère (4), centrée sur un axe d'injection central (Y2),
- un manchon (8), qui est agencé coaxialement à l'intérieur de la tuyère (4), et
- une aiguille (10), qui est montée mobile au niveau d'une extrémité du manchon (8) selon l'axe d'injection central (Y2),
dans lequel l'aiguille (10) est pivotante par rapport au manchon (8) autour de l'axe central (Y2) entre une première position, dans laquelle elle est arrimée axialement au manchon (8), et une seconde position, dans laquelle elle peut être désenclenchée axialement du manchon (8),
**caractérisé en ce que** l'injecteur (2) comprend des moyens (M1; M'1) pour bloquer l'aiguille (10) dans sa première position, lesdits moyens arrimant l'aiguille et le manchon (8) de manière fixe en rotation autour de l'axe central (Y2), et **en ce que** le moyen de blocage (M'1) comprend au moins une bille (26) et un ressort (28), qui sont installés axialement entre une nervure (16) de l'aiguille (10) et le manchon (8), le ressort exerçant une force de charge élastique axiale (F2) sur la bille afin de maintenir la bille dans un logement de la nervure.

2. Injecteur selon la revendication 1, **caractérisé en ce que** l'aiguille (10) porte, sur sa surface interne (106), au moins une nervure (16) qui fait saillie radialement vers l'axe central (Y2) et qui s'étend dans une direction qui est circonférentielle à l'axe central, et **en ce qu'**une rainure (18) s'étend axialement au niveau de l'extrémité du manchon (8) et sort sur un logement circonférentiel (23), la rainure et le logement circonférentiel étant adaptés pour guider la nervure de l'aiguille pendant un mouvement pivotant relatif entre l'aiguille (10) et le manchon (8).

3. Injecteur selon la revendication 2, **caractérisé en ce que** la nervure (16) s'étend sur un secteur angulaire, centré sur l'axe central (Y2), dont l'angle de sommet (A16) est sensiblement inférieur ou égal à l'ouverture angulaire (A18), prise selon une direction qui est circonférentielle à l'axe central de la rainure (18).

4. Injecteur selon la revendication 3, **caractérisé en ce que** la nervure (16) a une épaisseur (e16), mesurée parallèle à l'axe central, qui est sensiblement égale à la largeur (e23), mesurée parallèle à l'axe central du logement circonférentiel (23).

5. Injecteur hydraulique (2) pour une turbine Pelton (T), comprenant :
- une tuyère (4), centrée sur un axe d'injection central (Y2),
- un manchon (8), qui est agencé coaxialement à l'intérieur de la tuyère (4), et
- une aiguille (10), qui est montée mobile au niveau d'une extrémité du manchon (8) selon l'axe d'injection central (Y2),
dans lequel l'aiguille (10) est pivotante par rapport au manchon (8) autour de l'axe central (Y2) entre une première position, dans laquelle elle est arrimée axialement au manchon (8), et une seconde position, dans laquelle elle peut être désenclenchée axialement du manchon (8),
**caractérisé en ce que** l'injecteur (2) comprend des moyens (M1; M'1) pour bloquer l'aiguille (10) dans sa première position, lesdits moyens arrimant l'aiguille et le manchon (8) de manière fixe en rotation autour de l'axe central (Y2), et **en ce que** le moyen de blocage (M1) comprend une clé (24), qui est adaptée pour être insérée radialement à travers l'aiguille (10) dans un logement (84) prévu dans le manchon (8) lorsque l'aiguille est dans sa première position.

6. Turbine Pelton (T), comprenant une roue (R) pourvue d'une pluralité de goulottes (1) et d'injecteurs hydrauliques (2), les goulottes entraînant la roue autour d'un axe de rotation (X-X) sous l'action de jets d'eau (J) émis par les injecteurs dans la direction des goulottes, **caractérisée en ce que** les injecteurs sont en conformité avec l'une des revendications 1 à 5.

7. Procédé de démontage partiel d'un injecteur selon l'une des revendications 1 à 5, **caractérisé en ce qu'**il comprend des étapes impliquant :
a) le fait d'amener l'aiguille (10) à pivoter autour de l'axe d'injection central (Y2) de sa première position à sa seconde position, et
b) le fait de désenclencher l'aiguille axialement du manchon (8) de l'injecteur,
**caractérisé en ce que** l'injecteur (2) est en conformité avec l'une des revendications 1 à 5 et **en ce qu'**il comprend un stade préalable au stade a) impliquant la désactivation des moyens de blocage (M1; M'1) afin de permettre à l'aiguille (10) de pivoter entre sa première position et sa seconde position.
